# EUROPEAN PATENT APPLICATION

(11) **EP 1 343 083 A2**
(43) Date of publication of application: **10.09.2003**
(21) Application number: 03100302.3
(22) Date of filing: 12.02.2003
(51) Int. Cl.: G06F 9/46

(54) **Task-based hardware architecture for maximization of intellectual property reuse**

(30) Priority: 26.02.2002 US 83042
(71) Applicant: Zarlink Semiconductor V.N. Inc., Irvine, CA 92612 (US)
(72) Inventor: Chang, Rong-Feng, 92620, Irvine (US); Barrack, Craig, I., 92612, Irvine (US); Wang, Linghsiao, 92620, Irvine (US)
(74) Representative: Harding, Richard Patrick

(57) **Abstract**

A task-based chip-level hardware architecture. The architecture includes a task manager for managing a task with task information, and a task module operatively connected to the task manager for performing the task in accordance with the task information.

## Description

### BACKGROUND OF THE INVENTION

### TECHNICAL FIELD OF THE INVENTION

This invention is related to a chip-based architecture that includes a task-based methodology for processing information.

### BACKGROUND OF THE RELATED ART

Convergence is the coming together of basic telephony, telecommunications, the Internet, and private networks, with enormous potential for the introduction of new services and technologies. For chip manufacturers, the chief implication of the growing emphasis on convergence is that future products will need to be able to transport information not from just one interface to another, but from any interface to any other interface, convert from any information format to another, and provide new services and technologies as they are introduced. This converging communications model will require chip manufacturers to accommodate not one or two types of traffic, as in classical devices, but traffic in many directions, in many formats, and with many services required.

It is well-known that the capability of reusing intellectual property greatly reduces the total work of an organization as well as the time-to-market. In a conventional hardware design, each functional block performs its operations, and then passes the result to the next block in the data path. Under this "old school" design methodology, as long as the basic data flow remains the same, new functions can sometimes be added to existing blocks without disturbing surrounding blocks. This is the basis for traditional intellectual property reuse.

However, in this new evolving and complicated convergence environment, traditional intellectual property reuse no longer works, because the addition of a new traffic direction, format, or service means disrupting the majority of existing blocks in a chip. Indeed, the whole point of convergence is that everything is interconnected with everything else. But this creates a problem for non-disruptive intellectual property reuse.

What is needed is a next-generation concept for chip design. This concept must allow for the addition of entirely new data flows with as little change to the underlying platform as possible. This disclosure provides a novel methodology for hardware design that was created with the objective of maximizing intellectual property reuse in convergent architectures, though it can be applied to any chip design.

### SUMMARY OF THE INVENTION

The present invention disclosed and claimed herein, in one aspect thereof, comprises a task-based chip-level hardware architecture. The architecture includes a task manager for managing a task with task information, and a task module operatively connected to the task manager for performing the task in accordance with the task information.

Where there exist a plurality of task modules operatively communicating over respective ports with the task manager, the task manager receives input data and manages processing of the input data into output data by selectively routing input data information in the form of unique task messages through one or more of the plurality of task modules to generate the output data.

### BRIEF DESCRIPTION OF THE DRAWINGS

For a more complete understanding of the present invention and the advantages thereof, reference is now made to the following description taken in conjunction with the accompanying drawings, in which:
FIG. 1 illustrates a general block diagram of the disclosed task-oriented hardware architecture;
FIG. 2 illustrates an example of a task-based architecture in a star topology as it applies to a convergence device that provides a high-density, three-way bridge between TDM, IP, and ATM domains;
FIG. 3 illustrates one possible interface that provides connectivity between a task block and the task manager;
FIG. 4a illustrates a general task message structure, according to a disclosed embodiment;
FIG. 4b illustrates a sample message structure of a 128-bit task message, according to a disclosed embodiment;
FIG. 5 illustrates a structure for a generic task block; and
FIG. 6 illustrates the disclosed task-based architecture implemented in a tree topology.

### DETAILED DESCRIPTION OF THE INVENTION

The disclosed novel methodology is a next-generation concept for chip design created with the objective of maximizing intellectual property reuse in convergent architectures, though it can be applied to any chip design. The architecture is based upon a task-oriented approach used extensively in the software environment of computer science, in which each functional block (also denoted as a "task module") is considered a service provider or "subroutine." As a data packet is being processed in the chip, a main routine (or task manager) managing the processing of the data packet passes control information (i.e., "calls") to a specific service of a respective task block, receives control information and processed data back from the task block, and then forwards the processed data to the next task block for service. The process continues until a point of egress in the process is reached.

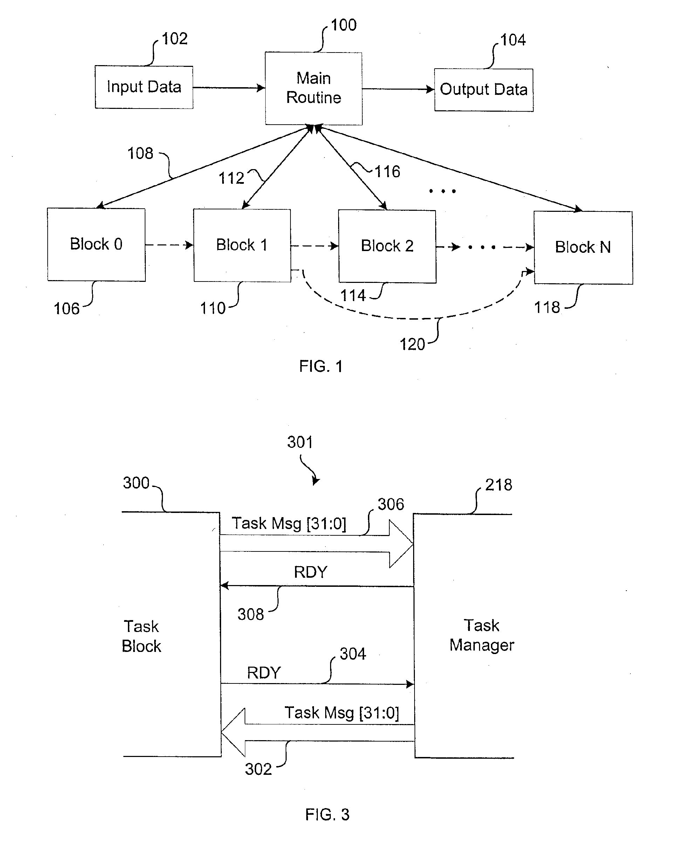

Referring now to FIG. 1, there is illustrated a general block diagram of the disclosed task-oriented hardware architecture. A main routine 100 receives input packet data 102 for processing to ultimately provide output data 104. Associated with the main routine 100 is a number of "sub-routine" blocks (hereinafter denoted "task" blocks) Block 0...N each representing an object of executable statements that are callable by the main routine 100 to facilitate completion of a task. For example, when the input packet data 102 is received into the main routine block 100, a first task block 106 is called in accordance with conventional means for providing software calls, as indicated by a first control variable path 108, to perform a specific subtask on packet information associated with the input packet data 102, in accordance with a predetermined overall task to be performed by the main routine 100. The first task block 106, as well as each task block, is designed to perform one unique predefined function on the data received into it for processing. All or portions of the input data 102 are passed to the first task block 106 on which operations are performed to arrive at first task output data. Note that a solid line between the main routine 100 and a task block illustrates the actual flow of control and data signals therebetween. Thus a double-arrowed line indicates bi-directional flow of control and data signals between the main routine 100 and the first task block 106. Each task block communicates with the main routine 100 over a separate (i.e., "dedicated") port. That is, no two task blocks communicate with the main routine 100 over the same communication path. Furthermore, no two task blocks communicate with each other. Note also that the dotted-line directional arrows between task blocks represent the equivalent point-to-point data flow through the various task blocks. Note that where the data is described as being "passed" from one block to another, the data may in actuality be stored in a shared memory, such that control information about the data packet location, size, and flow to which the data packet belongs, is being passed, and not the data *per se.*

Once the first task block 106 operates on the received input data 102 (or portions thereof) in accordance with its assigned function, first task output data is then passed back to the main routine 100 via the first control variable path 108 for processing by one or more subsequent tasks. Thus the main routine 100 passes the first task output data to a second task block 110 over a second control variable path 112. Note that data processed by a task block is not passed directly from one task block to another. Thus no single task block "is aware" of any other task block, neither before it nor after it in the flow of data, but simply communicates with the main routine 100. Furthermore, no task block has knowledge (i.e., logical information) of the topology in which it resides. The second task block 110 operates on the first task output data to generate second task output data, which is then passed back to the main routine 100 via the second control variable path 112. The data processing continues by the main routine 100 passing the second task output data to a third task block 114 via a third control variable path 116, which third task block 114 processes the second task output data to generate third task output data for passing back to the main routine 100. The process continues between the main routine 100 and a last task block 118, which last task block 118 processes the data received from the main routine 100 into last block output data, and passes the last block output data back to the main routine 100. The last block output data is then used to generate the output data 104. Thus the main routine 100 performs a switching function by switching task management between the various task blocks.

Although conceptually, data is passed from one task to another in a sequential manner, as represented by the dotted-line flow from Block 0 to Block N, it is appreciated that to more accurately depict the selective nature of the novel task-oriented architecture, that when data is processed and passed from, for example, the second task block 110, the overall tasking management of the main routine 100 may include selectively routing around (or bypassing) the third task block 114, since its function is not required, and passing the second task output data from the second task block 110 directly to the last task block 118, as indicated by the dotted bypass arrow 120.

The task-oriented architecture has two important attributes: intelligent functional division, and flexible data flow. Firstly, the total set of functions performed by the device are divided into small, well-defined sets called tasks. Each task represents a logical subdivision of chip functions. Interdependence among tasks is reduced wherever possible. A task can be cut and pasted from one task-based device into another without affecting other tasks. If an existing task is to be improved, the improvement should not extend far beyond the functional paradigm defined by the task, or else a new task should be defined instead. Such an improvement should only affect the processing inside of the task, not the task interfaces to other modules.

Secondly, once the set of functions has been intelligently divided into tasks, the task-based architecture must now define how these tasks can be coordinated to define a flexible data flow, that is, a flexible execution sequence for a given chip. In other words, assuming a chip has a set S of task objects each containing a certain procedure or collection of procedures, then any incoming packet, after classification, can have any of those procedures in set S performed upon it, and in any order. This includes sequences of events that were not envisioned when the chip was first developed. The architecture applies equally to the control plane (e.g. a task block that performs packet scheduling) and data plane (e.g., a task block that performs audio processing).

Flexibility is also exhibited for a given platform in that chip design and task augmentation now become increasingly cost effective. Given a platform that includes the set S of task objects in an intellectual property library of task modules, it becomes much easier to develop a chip using the set S of tasks when utilizing the disclosed architecture then with conventional methods, since task blocks do not interface with each other, but only with the task manager. Thus a new function that needs to be incorporated can be simply implemented by adding a new task object to perform the new function without impacting the operability of the other task objects. Moreover, a new chip incorporating this new function can be readily developed and manufactured. Platform flexibility is accommodated in that new features can be added or combined with old features into new chips with little or no change in existing intellectual property. Thus a task-based device can perform and/or transmit data to or from any of task block in any order, and if new functions or features are needed to keep up with current trends in technology, these function/features can be added with minimal engineering effort.

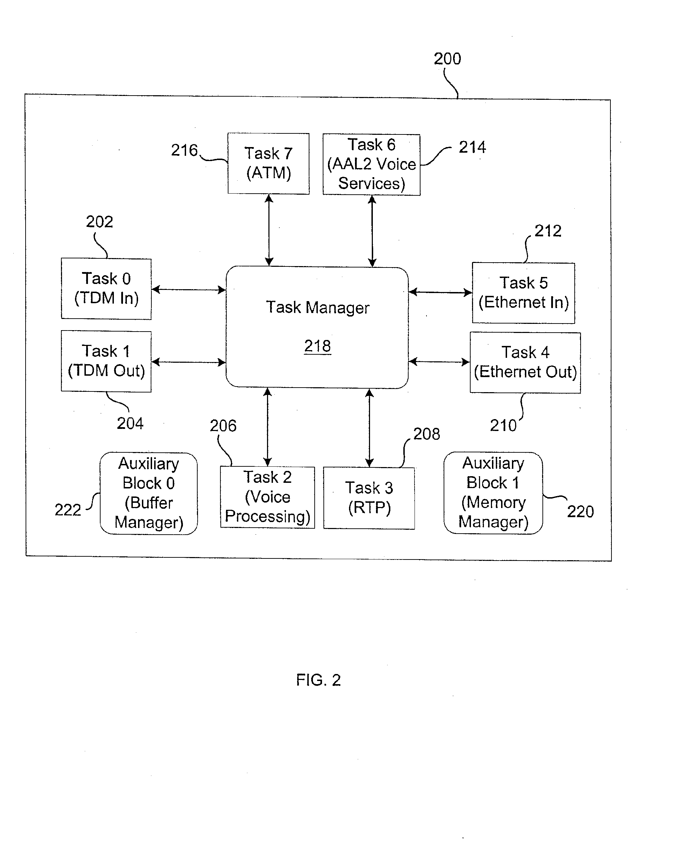

Referring now to FIG. 2, there is illustrated an example of a task-based architecture 200 as it applies to a convergence device that provides a high-density, three-way bridge between TDM (Time Division Multiplexing), IP (Internet Protocol), and ATM (Asynchronous Transfer Mode) domains. Each task block has a different role in the task-oriented architecture. Illustrated are eight task blocks (denoted Tasks 0-7), wherein a first task block 202 (also denoted Task 0) provides a TDM input function, a second task block 204 (also denoted Task 1) provides a TDM output function, a third task block 206 (also denoted Task 2) provides a voice processing function, a fourth task block 208 (also denoted Task 3) provides a RTP (Real-time Transport Protocol) function for streaming real-time multimedia over IP in data packets, a fifth task block 210 (also denoted Task 4) provides an Ethernet out function by preparing data packets for transport via an Ethernet medium, a sixth task block 212 (also denoted Task 5) provides an Ethernet in function by receiving data packets from an Ethernet medium, a seventh task block 214 (also denoted Task 6) provides AAL2 (ATM Adaptation Layer 2) voice services (e.g., compressed voice and video), and an eighth task block 216 (also denoted Task 7) provides an ATM function by processing data packets communicated via ATM.

Note that the block diagram in FIG. 2 is not restricted to the illustrated task modules, but can include a variety of different modules limited only by the functions desired by the designer. For example, task modules 210 and 212 can be replaced with other physical/data link protocols such as Token Ring, Gigabit Ethernet, GMII, MII, etc.

Centrally located in the illustration is a task manager block 218 that communicates bi-directionally with each task block to coordinate calls thereto on an as-needed basis. In this particular embodiment, the architecture is designed as a star topology with the task manager 218 as the hub and the task modules at the end nodes. The main function of the task manager 218 is to dispatch task information in the form of task messages to the task blocks. The task messages are different from one task module to the next, since the data passed to a first task module will be altered to some extent during task processing, and then passed therefrom in the form of another task message including the processed data back to the task manager 218. The task manager 218 may then further alter the task message before forwarding the data to the next task module for processing. Each task block interfaces only with the task manager 218 over a uniquely assigned and dedicated port, and not with another task block. From a high-level perspective, the task messages passed to and from the task manager 218 look much like packets, with a "header" section containing information that is useful in dispatching from one task block to the next, and a "payload" section containing information needed for task processing. The task manager 218 operates in a non-blocking mode, that is, the task manager 218 supports a full traffic load of calls to and from the task modules without congestion.

Each task block performs a specific set of functions on a data packet. For example, the TDM task module 202 assembles a payload data unit from channelized data, whereas the voice processing task module 206 may examine that packet payload in order to detect silence or change its encoding.

A task block performs its associated functions only after having received a task message from the task manager 218. A task message represents a request for packet processing and typically includes information required for the task processing to take place in a particular task module. For example, as part of the task message, the voice processing task module 206 must obtain a pointer to the payload data unit stored in a memory (not shown).

After a task block has performed the requested functions, it returns the flow of control to the task manager 218.

An auxiliary block provides helper functions to the task blocks. For example, when a task block reads data from or writes data to an external memory, the task block needs to interface with a memory manager auxiliary block 220 (also denoted as Auxiliary Block 1). In addition, a task block may frequently need to request or release buffer handles to or from a buffer manager task block 222 (also denoted as Auxiliary Block 0). Auxiliary blocks (220 and 222) serve as subroutines of task blocks, and therefore do not directly interface with the task manager 218. When an auxiliary block has completed its job, it returns the flow of control back to the calling task block. The auxiliary functions associated with auxiliary blocks are not related to the actual data flow of packets through the device. For example, the request of buffers by the Ethernet in module 212 can be performed periodically and without any connection to packets entering the device. This "packet ownership" property is an important distinction between task blocks and auxiliary blocks. Only a task block can "own" a packet.

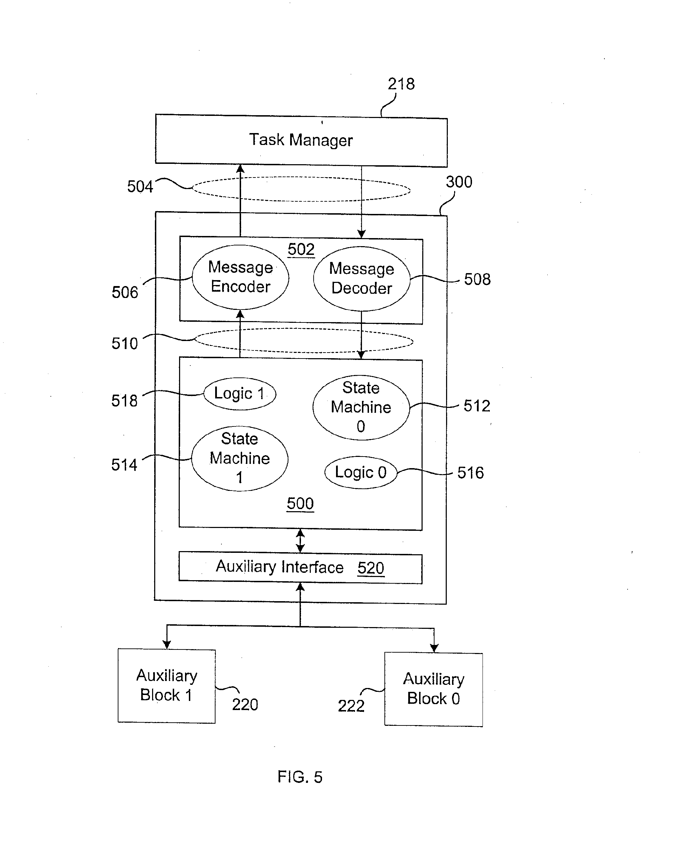

Referring now to FIG. 3, there is illustrated one possible interface 301 that provides connectivity between a task block 300 and the task manager 218. To prevent the loss of the task message, a RDY (Ready) signal is transmitted from the recipient to indicate that the recipient (either the task manager 218 or the task block 300) is ready to accommodate the task message. Thus the sender can send the task message only when the RDY signal is asserted by the recipient. It is also appreciated that a priority structure can be implemented such that each task message is assigned a priority. In this case, one RDY bit is needed per priority.

In this particular embodiment, the task manager/task block interface 301 includes a data bus pair and corresponding signal lines. A first 32-bit wide data bus 302 carries a task message imposed thereon from the task manager 218 to the task block 300, the transmission thereof occurring in response to the task block 300 asserting the RDY signal to the task manager 218 on a first RDY signal line 304. Similarly, a second 32-bit wide data bus 306 carries a task message imposed thereon from the task block 300 to the task manager 218, the transmission thereof occurring in response to the task manager 218 asserting the RDY signal to the task block 300 on a second RDY signal line 308.

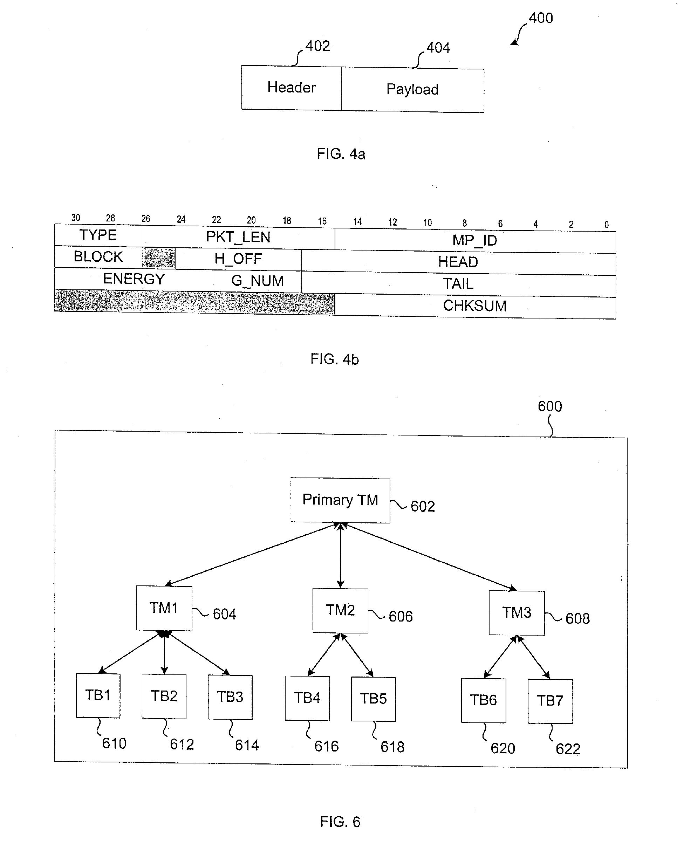

Referring now to FIG. 4a, there is illustrated a general structure of a task message 400, according to a disclosed embodiment. The task message 400 is a very short message, and consists of a header 402 and a payload 404. The task message 400 may include a message type field (not shown), which is used to indicate the format of the payload 404. The format of the payload 404 is very flexible and can be defined by chip designers. One task block can generate multiple formats for the task message payload 404 simply by using a different message type.

As indicated earlier, the header 402 is used for dispatch purposes, only. The header 402 may contain as little information as the identity of the next task, or as much information as the entire list of tasks, along with a pointer to the current task. On the other hand, the header 402 may contain a set of information data designed to resolve the next task, such as flow ID, priority, or type fields. Whether the next task is already known or needs to be resolved by the task manager 218 depends upon the distribution of mapping tables in the architecture.

The task payload 404 is used for packet processing by the task block. A few examples of control fields that may be contained in the task payload 404 include pointer information to the packet in memory, flow ID, packet length, energy level in the payload computed by the voice processing task module 206, and a partial checksum calculation.

Referring now to FIG. 4b, there is illustrated a sample message structure of a 128-bit task message 400, according to a disclosed embodiment. The following Table 1 summarizes the task message 400 field information.

**Table 1.**

| Glossary of Task Message Fields | | |
|---|---|---|
| **NAME** | **PURPOSE** | **BITS** |
| TYPE | Indicates execution sequence among task blocks for the given packet. | 5 |
| BLOCK | Records the task block from which the task message is being sent. | 5 |
| G_NUM | Provides the packet length in number of granules utilized. | 5 |
| PKT_LEN | Provides the payload length in bytes. | 11 |
| HEAD | Provides the pointer in memory to the first granule of the packet. | 18 |
| TAIL | Provides the pointer in memory to the last granule of the packet. | 18 |
| MP ID | Flow ID of the packet, used for flow-based handling. | 16 |
| H_OFF | Indicates the location in the packet of the first byte of payload. | 7 |
| CHKSUM | Records the partial checksum computed over the payload. | 16 |
| ENERGY | Indicates the silence energy level of the packet. The high-order bit is used as a landmark to indicate that the energy of the payload is below the silence threshold. | 9 |

The task header 402 must contain the information required by the task manager 218 to dispatch the task to the appropriate functional task block 300. As indicated hereinabove, the task manager 218 may simply need to read the next task directly from the header 402, or it may need to resolve the next task by looking at the fields in the task header 402 and performing a mapping. The issue here is a tradeoff, that is, where the data flow intelligence is either located in a central location, or distributed throughout the task blocks.

Three possible ways of handling the dispatch, include the following: embedding (or storing) a task list in the task header 402 at packet ingress; using (or storing) a mapping table in the task manager 218 to determine the next task; and distributing (or storing) the mapping table among the task modules. In the first scenario, when embedding the task list in the packet header 402 at packet ingress, the path that the packet 400 will take through the device is predetermined according to instructions stored in a lookup table. This predefined task execution sequence is configured by software and stored per flow. All task messages for the packet 400 contain this order of execution, along with pointer information in a pointer field that points to the next task to be performed. After performing its duties, the task block updates the task header 402 simply by incrementing the pointer field. When the task manager 218 receives the task message 400, it uses the pointer information to determine which task block the information is passed to next.

In the second scenario, a mapping table is used in the task manager 218 to determine the next task module to which the information is passed. In this scenario, software is utilized to configure a mapping table in the task manager 218. Using the last task and critical task header information (such as flow ID, priority, or type), the next task is retrieved from the mapping table.

In a third scenario, the mapping table is distributed among the task modules. Applying a similar concept as above, we distribute the mapping table among the task modules. Each task block maintains a local table that indicates the next task module, and explicitly writes the next task identifier into the task header 402. In this case, the task manager 218 need only examine the next task field in the task header 402 when performing the dispatch procedure.

Referring now to FIG. 5, there is illustrated a structure for the generic task block 300 (similar to any preceding task block or module). To provide for flexibility and reusability, the task block 300 is partitioned into two sublayers; a core 500 and a message processor 502. The main functions of the message processing sublayer 502 are the following: provide a common messaging interface 504 to the task manager 218; create the outgoing task message 400 using a message encoder 506 included in the message processor 502; transferring the encoded task message 400 from the message processor 502 to the task manager 218 via the common messaging interface 504; decoding the incoming task message 400 from the task manager 218 utilizing a message decoder 508 that is included in the message processor 502; extracting the control information contained in the payload 404 based upon the message type; and handling movement of control information to and from the core 500 of the task block 300 via an internal interface 510.

The core sublayer 500 includes one or more state machines (512 and 514) having respective logic blocks (516 and 518). A first state machine 512 receives the decoded message from the message decoder 508 of the message processor 502 via the internal interface 510, and performs the particular task of the task module 300, utilizing its corresponding first logic block 516. During this processing of the received task message 400, auxiliary services may be accessed utilizing an auxiliary interface 520 to an auxiliary block (e.g., 220 and 222). Of course, more auxiliary services may be accessed than those illustrated. When the first state machine 512 has completed its processing, activity is passed to the second state machine 514, whose accompanying logic block 518 prepares the resulting task message for transmission from the core 500 to the message processor 502 via the internal interface 510. Note that the second state machine 514 may also access auxiliary services via the auxiliary interface 520 in accomplishing its tasks.

A number of advantages are realized by utilizing the disclosed novel task-based architecture. Interface simplicity is achieved wherein each task has only one interface to the task manager 218. In a conventional architecture, each functional block may have a number of interfaces to other blocks. As illustrated in FIG. 2, the voice processing task module engine 206 only communicates with the task manager 218. However, the voice processing task module 206 can be part of numerous possible data flows. Instead of a conventional linear design wherein the voice processing module engine 206 would need to interface with all possible "next modules" in the data flow, the voice processing engine module 206 only has to interface with a single module in the disclosed task-based architecture.

The task-based architecture introduces the concept of modularity into chip operations. From a software perspective, these task modules can be viewed as "subroutines" or "objects," rather than part of the main data flow. As illustrated in FIG. 2, the various functional task modules require no interdependence. For example, data processing utilizing the voice processing engine module 206, the RTP engine module 208, and the AAL2 voice services pathway module 214 does not require that each module depend on each other for completion of a task, but only with the task manager 218.

The task-oriented architecture provides a future-proof design and scalability. For example, suppose that a future architecture based upon the same platform includes an XYZ engine. Furthermore, suppose that the XYZ engine is accessed at different times and for different reasons in different data flows supported by the device. The task-manager-based platform guarantees that nothing needs to change in order to accommodate the new XYZ engine, other than the mapping tables residing in the task manager 218 or distributed throughout the task blocks.

The task-based architecture also provides ease of debugging. This follows from the interface simplicity and modularity advantages mentioned hereinabove, since ease of debugging affects time-to-market and the success of the final product as much as anything.

Referring now to FIG. 6, there is illustrated an alternative embodiment of the task-based architecture in a tree topology. The device 600 includes a primary task manager 602 (also denoted "Primary TM") in direct communication with one or more sub-task managers (604, 606, and 608) (also denoted in the illustration as TM1, TM2, and TM3, respectively, and with Primary TM, TM1, TM2, and TM3, all similar to task manager 218). The Primary TM 602 includes a number of dedicated (i.e., uniquely assigned) communication ports for communicating with the respective sub-task managers (604, 606, and 608). For example, the Primary TM 602 provides a first dedicated port through which communication with the first sub-task manager 604 is conducted, which first sub-task manager 604 manages tasks among three associated task blocks (610, 612, and 614, also denoted respectively as TB1, TB2, and TB3). Thus the first sub-task manager 604 coordinates data processing in accordance with the task functions of the associated task blocks (610, 612, and 614) for data received from the Primary TM 602. Once processing is complete, flow of control is released back to the Primary TM 602 from the first sub-task manager 604.

Similarly, the second sub-task manager 606 communicates directly with the Primary TM 602 via a second dedicated port, which second sub-task manager 606 manages tasks among two associated task blocks (616 and 618, also denoted respectively as TB4 and TB5). Thus the second sub-task manager 606 coordinates data processing in accordance with the task functions of the associated task blocks (616 and 618) for data received from the Primary TM 602. Once processing is complete, flow of control is released back to the Primary TM 602 from the second sub-task manager 606.

Similarly, the third sub-task manager 608 communicates directly with the Primary TM 602 via a third dedicated port, which third sub-task manager 608 manages tasks among two associated task blocks (620 and 622) (also denoted TB6 and TB7). Thus the third sub-task manager 608 coordinates data processing in accordance with the task functions of the associated task blocks (620 and 622) for data received from the Primary TM 602. Once processing is complete, flow of control is released back to the Primary TM 602 from the third sub-task manager 608.

Since each sub-task manager (604, 606, and 608) is structured similarly to the Primary TM 602, each sub-task manager (604, 606, and 608) includes a number of dedicated ports through which communication occurs with the respective task modules. Thus, in this particular embodiment, for example, the second sub-task module 606 includes at least two dedicated ports for communicating independently with the associated task modules (616 and 618).

In an alternative embodiment, it is appreciated that the tree topology for the device 600 may include a central communication bus on which a plurality of the primary task managers are disposed. Furthermore, one or more sub-task managers are in direct communication with respective primary task managers, which direct communication is independent of the central communication bus.

Although the preferred embodiment has been described in detail, it should be understood that various changes, substitutions, and alterations can be made therein without departing from the spirit and scope of the invention as defined by the appended claims.

## Claims

1. A task-based chip-level hardware architecture, comprising:
a task manager for managing a task with task information; and
a task module operatively connected to the task manager for performing the task in accordance with the task information.

2. The architecture of claim 1, further comprising a plurality of task modules that are in operative communication with the task manager, wherein the architecture is structured according to a star topology.

3. The architecture of claim 2, wherein the task manager is a hub of the star topology.

4. The architecture of claim 1, wherein the task is a predefined function dedicated to the task module.

5. The architecture of claim 1, wherein the task module communicates only with the task manager.

6. The architecture of claim 1, wherein the task module operatively connects to the task manager via a dedicated port.

7. The architecture of claim 1, wherein the task module functions independently of a topology in which it is utilized.

8. The architecture of claim 1, wherein the task manager performs a switching function by switching task management among a plurality of task modules, each of the plurality of task modules performing a predefined task.

9. The architecture of claim 1, wherein the task information is exchanged between the task manager and the task module via a 32-bit bus.

10. The architecture of claim 1, wherein the task information is transmitted from a sender only when a recipient permits transmission therefrom.

11. The architecture of claim 10, wherein when the sender is the task manager, the recipient is the task module, and when the sender is the task module, the recipient is the task manager.

12. The architecture of claim 1, further comprising an auxiliary module that provides a support function to the task module.

13. The architecture of claim 1, further comprising an auxiliary module that provides a support function to the task module, and which auxiliary module communicates only with the task module.

14. The architecture of claim 1, wherein the task information includes a task message having header data and payload data, which header data includes dispatch information for routing the task message, and which payload data includes packet information associated with packet data on which the task is performed.

15. The architecture of claim 14, wherein the dispatch information is made available in the architecture by including at least one of embedding a task list in the header, storing a mapping table in the task manager, and storing the mapping table in the task module.

16. The architecture of claim 1, wherein the task module further comprises a core sublayer for performing the task, which core sublayer includes one or more state machines and accompanying logic to perform the task, and interfaces with one or more auxiliary modules.

17. The architecture of claim 1, wherein the task module further comprises a message processor that provides a messaging interface between the task manager and the task module.

18. The architecture of claim 1, wherein the architecture is structured according to a tree topology such that a plurality of task modules are provided in communication with a plurality of task managers.

19. The architecture of claim 18, wherein the plurality of task managers include a first task manager and a second task manager that are in direct communication with one another to facilitate completion of the task.

20. The architecture of claim 1, further comprising a plurality of task modules operatively communicating over respective ports with the task manager, which task manager receives input data and manages processing of the input data into output data by selectively routing input data information in the form of task messages through one or more of the plurality of task modules to generate the output data.

21. A method of task-based chip-level data processing, comprising:
providing a task manager for managing a task with task information; and
operatively connecting a task module to the task manager for performing the task in accordance with the task information.

22. The method of claim 21, further comprising a plurality of task modules in the step of connecting that are in operative communication with the task manager and structured according to a star topology.

23. The method of claim 22, wherein the task manager in the step of providing is a hub of the star topology.

24. The method of claim 21, wherein the task in the step of providing is a predefined function dedicated to the task module.

25. The method of claim 21, wherein the task module in the step of connecting communicates only with the task manager.

26. The method of claim 21, wherein the task module in the step of connecting operatively connects to the task manager via a dedicated port.

27. The method of claim 21, wherein the task module in the step of connecting functions independently of a topology in which it is utilized.

28. The method of claim 21, wherein the task manager in the step of providing performs a switching function by switching task management among a plurality of task modules, each of the plurality of task modules performing a predefined task.

29. The method of claim 21, wherein the task information in the step of providing is exchanged between the task manager and the task module via a 32-bit bus.

30. The method of claim 21, wherein the task information in the step of providing is transmitted from a sender only when a recipient permits transmission therefrom.

31. The method of claim 30, wherein when the sender is the task manager, the recipient is the task module, and when the sender is the task module, the recipient is the task manager.

32. The method of claim 21, further comprising the step of providing an auxiliary module that provides a support function to the task module.

33. The method of claim 21, further comprising the step of providing an auxiliary module that provides a support function to the task module, and which auxiliary module communicates only with the task module.

34. The method of claim 21, wherein the task information the step of providing includes a task message having header data and payload data, which header data includes dispatch information for routing the task message, and which payload data includes packet information associated with packet data on which the task is performed.

35. The method of claim 34, wherein the dispatch information is made available by further including at least one of the steps of,
embedding a task list in the header,
storing a mapping table in the task manager, and
storing the mapping table in the task module.

36. The method of claim 21, wherein the task module in the step of connecting further comprises a core sublayer for performing the task, which core sublayer includes one or more state machines and accompanying logic to perform the task, and interfaces with one or more auxiliary modules.

37. The method of claim 21, wherein the task module in the step of connecting further comprises a message processor that provides a messaging interface between the task manager and the task module.

38. The method of claim 21, further comprising the step of structuring a plurality of task modules in communication with a plurality of task managers according to a tree topology.

39. The method of claim 38, wherein the plurality of task managers in the step of structuring include a first task manager and a second task manager that are in direct communication with one another to facilitate completion of the task.

40. The method of claim 21, further comprising the step of providing a plurality of task modules operatively communicating over respective ports with the task manager, which task manager receives input data and manages processing of the input data into output data by selectively routing input data information in the form of unique task messages through one or more of the plurality of task modules to generate the output data.
